# EUROPÄISCHE PATENTSCHRIFT

(11) **EP 1 291 200 B1**
(45) Veröffentlichungstag und Bekanntmachung des Hinweises auf die Patenterteilung: **28.12.2005**
(21) Anmeldenummer: 01121500.1
(22) Anmeldetag: 08.09.2001
(51) Int. Cl.: B43K 29/10

(54) **Handschreibgerät mit integriertem Touch-Pen-Element und UV-Lichtquelle**
Manual writing tool with integrated touch- pen-element and UV light source
Instrument d'écriture avec un élément-crayon tactile intégré et une source de lumière UV

(43) Veröffentlichungstag der Anmeldung: 12.03.2003
(73) Patentinhaber: TOP-Q AG, 6300 Zug (CH)
(72) Erfinder: Curths, Beate, 63069 Offenbach (DE)

(56) Entgegenhaltungen:
- EP-A- 0 964 354
- DE-U- 9 316 443
- US-A- 5 617 304
- PATENT ABSTRACTS OF JAPAN vol. 1995, no. 11, 26. Dezember 1995 (1995-12-26) & JP 07 195890 A (CASIO COMPUT CO LTD), 1. August 1995 (1995-08-01)

## Beschreibung

Die Neuerung betrifft ein Handschreibgerät mit mindestens zwei wechselweise einsetzbaren Schreibspitzen, dessen der Schreibspitze abgewandtes Ende mit einer UV-Lichtquelle (ultraviolett), d.h. einer elektronischen Apparatur zur Erzeugung eines UV-Lichts mit einem Spektrum von 200 bis 400 Nanometer (Lichtwellenlänge), versehen ist. Die Ausgangsöffnung der Lichtquell befindet sich an der der Schreibspitze abgewandten Stirnseite des Handschreibgeräts.

Im Zahlungsverkehr sind jüngst Zahlungsmittel eingeführt, welche aufgrund der Verwendung von unter Einfluss bestimmter Lichtquellen reflektierender Materialien auf ihre Echtheit überprüft werden können. Die der Fälschungssicherheit dienende Verwendung solcher reflektierenden Materialien oder Bestandteile soll es zusammen mit weiteren Echtheitsmerkmalen allen Nutzern gleichermaßen ermöglichen, eine gewisse Sicherheit im Zahlungsverkehr herzustellen und Fälschungen schnell auszusondem.

Ein solches Hilfsmittel zur schnellen Prüfung dieser lichttechnischen Echtheitsmerkmale von Zahlungsmitteln stellt eine gesundheitlich unschädliche UV-Lichtquelle dar. Die genaue Spezifikation der Lichtwellenlängen kann den Erfordernissen der zu prüfenden Zahlungsmittel oder sonstiger Dokumente angepasst werden. Diese weder für das bloße Auge noch für andere Lichtquellen erkennbaren Merkmale treten nur unter Verwendung der angepassten Lichtwellenlänge zu Tage.

Damit wird es dem Nutzer möglich, auf schnelle und einfache Art und Weise eine Prüfung der Zahlungsmittel oder Dokumente auf ihre Echtheit vorzunehmen ohne dass er sich hierzu eines sachverständigen Rates einer anderen Person oder Institution bedienen muß.

Bei angepasster UV-Lichtquelle auf das jeweilige Zahlungsmittel oder Dokument, wird beim beleuchten desgleichen deutlich ob dieses auf die Lichtquelle reagiert, das Licht reflektiert oder eine bestimmte verborgenen Struktur preisgibt.

Bekannt sind solche UV-Lichtquellen bereits seil längerem in der breiten Öffentlichkeit. Sie werden vorzugsweise bei Banken, Wechselstuben, Warenhäusern, Geschäfte oder sonstigen Bargeld annehmenden Stellen genutzt. Dabei handelt es sich vorwiegend um Apparaturen, welche aufgrund ihrer Größe und Form nicht zur Mitnahme geeignet sind, sondern eher einer ortsfesten Verwendung dienen. Aus der DE 9316443U ist ein Handschreibgerät mit einer Lichtquelle bekannt.

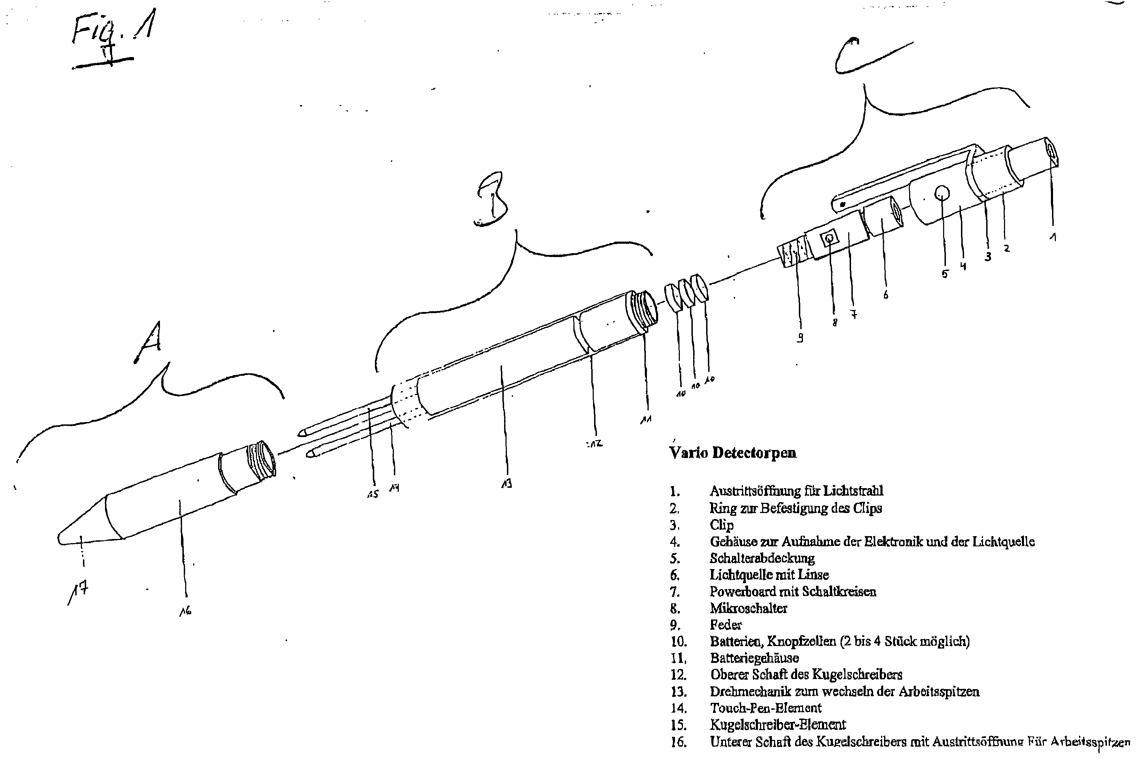

Bezugnehmend auf das Bedürfnis an jedem Ort und zu jeder Zeit ein verlässliches Prüfinstrument zur Hand zu haben, betrifft die Neuerung die Verwendung einer solchen UV-Lichtquelle im Schaft und der Kappe eines Handschreibgeräts -Fig. 1 -.

Bei der im vorliegenden Handschreibgerät verwendeten UV-Lichtquelle handelt es sich um eine übliche Lichtquelle (Ziff. 6), welche mittels einer integrierten Linse (Ziff. 6) auf Lichtwellenlängen von 200 bis 400 Nanometern spezifiziert werden kann.

Aufgrund der Verwendung der UV-Lichtquelle in der Kappe, dem oberen Schaft eines Handschreibgeräts (Ziff. 12), musste die Größe der Lichtquelle (Ziff. 6) und der gesamten zur Erzeugung notwendigen Elektronik minimiert werden. Für die Lichtquelle und die gesamte Elektronik werden nur 30 % des Gesamtvolumens eines solchen Handschreibgeräts benötigt.

Die im oberen Schaft und der Kappe untergebrachte Elektronik zur Erzeugung des UV-Lichtes setzt sich zusammen aus einer Lichtquelle mit Linse (Ziff. 6), einem Powerbord mit Schaltkreisen (Ziff. 7) und einem Mikroschalter (Ziff. 8). Die Energie bezieht die Elektronik aus zwei bis vier Knopfzellen (Batterien) mit einem Durchmesser kleiner als 8 mm (Ziff. 10), deren negativer Pol mittels einer Feder (Ziff. 9) mit den Schaltkreisen des Powerbord (Ziff. 7) und deren positiver Pol mit dem Schaft verbunden ist, wodurch es bei betätigten Mikroschalter (Ziff. 8) zu einem geschlossenen Stromkreis sowie Energiefluss und dadurch zu einem brennen der Lichtquelle (Ziff. 6) kommt. Die durch die integrierte Linse (Ziff. 6) gebündelte und auf eine bestimmte Wellenlänge spezifizierten Lichtwellen treten über die am der Schreibspitze abgewandten Ende des Stiftes angeordnete Austrittsöffnung (Ziff. 1) aus.

Der die Elektronik, die Knopfzellen und die Austrittsöffnung beinhaltende obere Teil des Handschreibgeräts setzt sich zusammen aus zwei Gehäusen, einem Gehäuse zur Aufnahme der Elektronik und der Lichtquelle (Ziff. 4) und einem Gehäuse zur Aufnahme der Knopfzellen (Ziff. 11), welche mittels eines Gewindes miteinander verbunden sind. Dadurch werden die Knopfzellen gegeneinander und die unterste Knopfzelle mit dem negativen Pol auf die Feder (Ziff. 9) gedrückt, wodurch ein unterbrechungsfreier Stromkreis erst möglich wird.

Das Gehäuse zur Aufnahme der Elektronik und der Lichtquelle (Ziff. 4) beinhaltet weiter eine Öffnung, welche mittels einer variablen Schalterabdeckung (Ziff. 5) versehen ist. Hinter dieser Schalterabdeckung (Ziff. 5) befindet sich der Mikroschalter (Ziff. 8) des Powerbords (Ziff. 7). Durch Druck auf die variable Schalterabdeckung (Ziff. 5) wird der Mikroschalter (Ziff. 8) betätigt. Dadurch wird der Stromkreis geschlossen oder unterbrochen, d.h. die Lichtquelle (Ziff. 6) aktiviert oder deaktiviert. Darüber hinaus befindet sich am Gehäuse zur Aufnahme der Elektronik und der Lichtquelle (Ziff. 4) ein Clip (Ziff. 3), welcher mittels eines Rings (Ziff. 2) am Gehäuse befestigt wird und der Befestigung des Handschreibgerätes an anderen Gegenständen dient.

Bei dem Handschreibgerät handelt es sich um ein Mehrfarb-Handschreibgerät nach dem Oberbegriff des Schutzanspruchs 1, welches mit mindestens zwei wechselweise einsetzbaren Schreibspitzen (Minen, Ziff. 14+15) - von denen mindestens eine Schreibspitze eine Druckspitze (Tousch-Pen-Element, Ziff. 14) zur Eingabe auf druckempfindlichen Flächen (Touch-Point) und mindestens eine Schreibspitze die Spitze einer Farbstoff oder Farbpigment abgebenden Mine (Ziff. 15) ist, nach dem Oberbegriff des Schutzanspruchs 1 - besetzt ist.

Der Mechanismus zum Wechseln der Arbeitsspitzen, vornehmlich ein Drehmechanismus, ist im mittleren Schaft (Ziff. 13) des Handschreibgerätes untergebracht. Der mittlere Schaft des Handschreibgerätes ist mittels eines Gewindes mit dem unteren Schaft des Handschreibgerätes (Ziff. 16) verbunden, welcher eine Austrittsöffnung für die Schreib- oder Druckminen (Ziff. 17) aufweist.

Vorzugsweise ist das neue Handschreibgerät auf der Basis eines Wechselkugelschreibers ausgebildet, da Kugelschreiber heutzutage häufiger im Einsatz sind als Mehrfarbstifte. Dementsprechend ist vorzugsweise eine Druckspitze Teil eines auswechselbaren Touch-Pen-Elements (Ziff. 14), welches in seiner äußeren Ausbildung im wesentlichen einer Kugelschreibermine entspricht, wie sie als Auswechselmine für das entsprechende Handschreibgerät vorgesehen ist. Hier kommt die Gestalt einer handelsüblich genormten kurzen Kugelschreibermine mit einer Länge von 65 mm zum Einsatz.

Zur Vermeidung von Beschädigungen auf den druckempfindlichen Eingabegeräten (Touch-Pads) besteht diese Mine vorzugsweise massiv aus Kunststoff, wobei die Spitze abgerundet ist. Wie groß der Abrundungsradius der Druckspitze ist, hängt von der Auflösung des Touch-Pads ab. Für hohe Auflösungen ist ein geringerer Abrundungsradius zu wählen. Zur Vermeidung von Abrieb sollte der verwendete Kunststoff abriebsfest sein, andererseits eine gewisse Gleiteigenschaft aufweisen.

Die Erfindung hat sich das Ziel gesetzt, eine UV-Licht-Prüfapparatur zusammen mit einem alltagsüblichen Schreibgerät zu vereinen. Damit soll dem Verwender ein ständiges Mitführen einzelner Geräte vereinfacht werden.

Musste der Verwender früher neben dem Schreib- und Eingabegerät eine separate UV-Lichtquelle bei sich führen, genügt ihm nunmehr ein Handschreibgerät mit integrierter UV-Lichtquelle.

Damit wird er in die Lage versetzt, neben Schreibarbeiten (Farbstoffminen) einen PC zu bedienen (Touch-Pen-Element) oder aber per UV-Lichtquelle Zahlungsmittel oder Dokumente auf Echtheit zu prüfen..

Die Neuerung sieht daher ein Mehrfarb-Handschreibgerät nach dem Oberbegriff des Schutzanspruchs 1 vor, bei dem das der Schreibspitze abgewandte Ende als eine UV-Lichtquelle ausgebildet ist.

In der beigefügte Zeichnung ist in Fig. 1 eine beispielhafte Ausführung eines Handschreibgeräts mit Touch-Pen-Element sowie integrierter UV-Lichtquelle dargestellt. Bezug nehmend auf die Fig. 1 setzt sich das angemeldete Handschreibgerät wie folgt zusammen:

Das Handschreibgerät besteht aus mehren Teilen, einem unteren (Schreibeteil, A), einem mittleren (Aufnahme der Knopfzellen, B) und einem oberen (zur Aufnahme der Elektronik und der Lichtquelle, C).

Der untere Teil setzt sich aus zwei Hülsenelementen (Ziff. 12+16) zusammen, welche den Wechselmechanismus (Ziff. 13) sowie die beiden Minenelemente (Ziff. 14+15) enthalten. Die Hülsenelemente bestehen vorzugsweise aus Kunststoff oder Metall.

Das die Spitzen der Minen umgebende Hülsenelement (Ziff. 16) läuft spitz zu und sieht eine im Radius der eingesetzten Minen minimal weitere Austrittsöffnung (Ziff. 17) vor. Die der Austrittsöffnung abgewandte Stirnseite des Hülsenelements ist auf das den Wechselmechanismus und die Minen beinhaltende Hülsenelement (Ziff. 12) aufsteckbar oder aufdrehbar. Beide Hülsenelemente sind gegeneinander drehbar. Die Drehmechanik (Ziff. 13 )zum Wechseln der Arbeitsspitzen (Minen) ist im einzelnen nicht dargestellt.

An den unteren Teil (A) schließt sich der mittlere Teil (Aufnahme der Knopfzellen, B) an, ebenfalls aus einem vorzugsweise aus Kunststoff oder Metall bestehenden Gehäuse bestehen, welches auf das den Wechselmechanismus und die Minen beinhaltende Hülsenelement (Ziff. 12) aufgesteckt oder aufgedreht wird.

Die Verbindung des mittleren Teils (B) mit dem oberen Teil (C), dem Gehäuse (Ziff. 4) zur Aufnahme der Elektronik (Ziff. 7+8) und der Lichtquelle (Ziff. 6) - vorzugsweise ebenfalls aus Kunststoff oder Metall bestehend -, erfolgt mittels eines Drehmechanismus, wobei das Innengewinde am mittleren Teil (B) angebracht ist. Durch das Aufdrehen auf das Gehäuse zur Aufnahme der Elektronik und der Lichtquelle (Ziff. 4) werden die Knopfzellen (Ziff. 10) an die Feder (Ziff. 9) gedrückt und fixiert.

Am Gehäuse zur Aufnahme der Elektronik (Ziff. 7+8) und der Lichtquelle (Ziff. 4) ist neben der für ein Handschreibgerät obligatorischen Befestigungsklammer (Ziff. 3), welche über einen Ring (Ziff. 2) am Gehäuse (Ziff. 4) befestigt wird, seitlich eine knopfförmige variable Schalterabdeckung (Ziff. 5), das Bedienelement, enthalten, hinter welcher sich der Mikroschalter (Ziff. 8) befindet. Durch Druck auf die variable Schalterabdeckung (Ziff. 5) wird der Mikroschalter (Ziff. 8) betätigt.

An der der Schreibspitze entgegengesetzten Stirnseite des Handschreibgerätes befindet sich vorzugsweise eine runde Austrittsöffnung (Ziff. 1), durch welche das durch die Lichtquelle erzeugte und die Linse (Ziff. 6) gebündelten UV-Licht austritt.

Die Energieversorgung besteht aus zwei bis vier handelsüblichen runden Knopfzellen (Ziff. 10) mit einem Durchmesser kleiner als 8 mm

Die Zeichnung zeigt nur eine beispielhafte Ausführungsform der Neuerung dar.

## Patentansprüche

1. Handschreibgerät mit mindestens zwei wechselweise einsetzbaren Schreibspitzen, **dadurch gekennzeichnet, dass** mindestens eine der zwei wechselweise einsetzbaren Schreibminen als eine nicht Farbstoff oder Farbpigment abgebende Druckmine (Ziff.14) sondern als sogenanntes Touch-Pen-Element, welches als Eingabemittel für druckempfindliche Computer-Eingabeflächen, sogenannte Touch-Pads oder auch Touch-Screens, ausgebildet ist, und dass das der Schreibspitze abgewandte Ende des Handschreibgerätes mit einer UV-Lichtquelle, d. h. einer elektronischen Apparatur (Teil C) zur Erzeugung eines UV-Lichts unterschiedlicher Wellenlänge, versehen ist (Fig. 1).

2. Handschreibgerät nach Anspruch 1, **dadurch gekennzeichnet, dass** es ein Wechselkugelschreiber oder Wechselstift handelsüblichen Ausmaßes mit mindestens zwei Minenhalterungen und insbesondere einem Drehwechselmechanismus oder einem Schiebewechselmechanismus ist, in dessen der der Schreibspitze abgewandten Ende (Teil C) die Apparaturen zur Erzeugung eines UV-Licht nebst Energieversorgung eingesetzt ist.

3. Handschreibgerät nach Anspruch 1, **dadurch gekennzeichnet, dass** es ein Wechselkugelschreiber oder Wechselstift handelsüblichen Ausmaßes mit mindestens zwei Minenhalterungen und insbesondere einem Drehwechselmechanismus oder einem Schiebewechselmechanismus ist, in dessen eine Minenhalterung ein minenähnlicher Schaft, ein sogenanntes Touch-Pen-Element mit einer Druckspitze eingesetzt ist.

4. Handschreibgerät nach Anspruch 1, **dadurch gekennzeichnet, dass** sich die Ausgangsöffnung des UV-Lichtstrahls (Ziff. 1) an der der Schreibspitze abgewandten Stirnseite des Handschreibgeräts befindet.

5. Handschreibgerät nach Anspruch 1, **dadurch gekennzeichnet, dass** sich das der Schreibspitze abgewandte, die Elektronik (Ziff. 7+ 8) und der Lichtquelle nebst Linse (Ziff.6) beinhaltende Ende des Handschreibgeräts mittels Gewinde von dem mittleren Hülsenteil, dem Gehäuse zur Aufnahme der Knopfzellen (Ziff. 11) abschrauben lässt.

6. Handschreibgerät nach Anspruch 1, **dadurch gekennzeichnet, dass** das der Schreibspitze abgewandte, die Apparatur zur Erzeugung des UV-Lichts beinhaltende Hülsenteil aufsteckbar oder aufschraubar ist.

7. Handschreibgerät nach Anspruch 1, **dadurch gekennzeichnet, dass** sich das Bedienelement der UV-Lichtquelle (Ziff.8 + 5)- An- und Ausschalter- an der Außenseite des Schaftes (Ziff.4) befindet.

8. Handschreibgerät nach Anspruch 1, **dadurch gekennzeichnet, dass** das Bedienelement der UV-Lichtquelle (An- und Ausschalter) in den Clip integriert ist.

## Claims

1. Hand writing appliance with at least two alternately useable tips, **characterized in that** at least one of the two alternately useable writing cartridges is modelled as a pressure cartridge not discharging colour or colour pigment (No.14), but as a so-called touch-pen-element, as a means of input for pressure-sensitive computer input surfaces, so-called touch-pads or also touch-screens, and that the end of the hand writing appliance turned away from the tip is provided with a UV light source, i.e. an electronic apparatus (Part C) for producing UV light of various wavelengths (Fig. 1).

2. Hand writing appliance as per Claim 1, **characterized in that** it is an alternate ballpoint pen or alternate pen with the dimensions of a commercially available hand writing appliance and at least two cartridge holders and in particular a twist-on alternating mechanism or a slip-on alternating mechanism, into whose end turned away from the tip (Part C) the apparatus to produce UV light plus power supply is inserted.

3. Hand writing appliance as per Claim 1, **characterized in that** it is an alternate ballpoint pen or alternate pen with the dimensions of a commercially available hand writing appliance and at least two cartridge holders and in particular a twist-on alternating mechanism or a slip-on alternating mechanism, into whose one cartridge holder a cartridge-like switch, a so-called touch-pen-element with a pressure tip is inserted.

4. Hand writing appliance as per Claim 1, **characterized in that** the exit cone of the UV light beam (No.1) is located front of the handwriting appliance turned away from the tip.

5. Hand writing appliance as per Claim 1, **characterized in that** the end of the hand writing appliance turned away from the tip comprising the electronics (No.7 + 8) and the light source plus lens (No.6) can be screwed off from the middle part of the case in order to incorporate the round cells (No.11) by means of a thread.

6. Hand writing appliance as per Claim 1, **characterized in that** the part of the case turned away from the tip comprising the apparatus for producing the UV light can be slipped on or screwed on.

7. Hand writing appliance as per Claim 1, **characterized in that** the control element of the UV light source (No.8 + 5) - on/off switch - is located on the outside of the shaft (No.4).

8. Hand writing appliance as per Claim 1, **characterized in that** the control element of the UV light source (on/off switch) is nitrated in the clip.

## Revendications

1. Outil d'écriture manuelle avec au moins deux pointes d'écriture interchangeables, qui se **caractérise par** l'existence de deux mines d'écriture interchangeables dont l'une au moins est conçue sous la forme d'une tête qui, par pression (fig. 4) ne libère ni colorant ni pigment coloré, mais agit en tant que touch pen (stylo tactile), outil d'entrée des données pour les écrans tactiles de saisie d'ordinateurs, désignés sous les termes de touch pads (pavé tactiles) ou encore de touch screens (écrans tactiles) et par le fait que l'extrémité de l'outil d'écriture situé à l'opposé de la pointe d'écriture, est équipée d'une source de rayons UV, c'est-à-dire d'un dispositif électronique (partie C) destiné à générer un rayon UV de différentes longueurs d'onde (fig. 1).

2. Outil d'écriture manuelle selon la revendication 1, qui se **caractérise par** le fait d'être un stylo bille ou un crayon rechargeable tels que ceux qui se trouvent habituellement dans le commerce, avec au moins deux porte-mines et, notamment, un système de recharge par rotation ou par poussée au bout duquel, c'est-à-dire dans l'extrémité qui est à l'opposé de la pointe d'écriture (partie C), se trouvent le dispositif générant le rayon UV ainsi que l'alimentation électrique.

3. Outil d'écriture manuelle selon la revendication 1, qui se **caractérise par** le fait d'être un stylo bille rechargeable ou un crayon rechargeable tels que ceux qui se trouvent habituellement dans le commerce, avec au moins deux porte-mines et, notamment, un système de recharge par rotation ou par poussée, dans lequel un porte-mine, interrupteur ressemblant à une mine, un élément touch pen (stylo tactile) avec pointe de pression est intégré.

4. Outil d'écriture manuelle selon la revendication 1, qui se **caractérise par le fait que** le cône de sortie du rayon de lumière UV (fig. 1) se trouve au bout de l'extrémité de l'outil d'écriture manuelle, qui est à l'opposé de la pointe d'écriture.

5. Outil d'écriture manuelle selon la revendication 1, qui se **caractérise par le fait que** l'extrémité de l'outil d'écriture manuelle qui se trouve à l'opposé de la pointe d'écriture et qui contient les éléments électroniques (fig. 7 + 8) ainsi que la source lumineuse en plus de la lentille (fig. 6) est conçue avec un filetage qui lui permet d'être dévissée du manchon médian, c'est-à-dire le boîtier pour la réception des piles rondes (fig. 11).

6. Outil d'écriture manuelle selon la revendication 1, qui se **caractérise par le fait que** le manchon qui se trouve à l'opposé de la pointe d'écriture et qui renferme le dispositif de production de rayons UV peut être emboîté ou vissé.

7. Outil d'écriture manuelle selon la revendication 1, qui se **caractérise par le fait que** l'élément de réglage de la source de lumière UV (fig. 8 + 5) - le commutateur pour allumer et éteindre - se trouve sur le côté extérieur du manchon (fig. 4).

8. Outil d'écriture manuelle selon la revendication 1, qui se **caractérise par le fait que** l'élément de réglage de la source de rayons UV (le commutateur pour allumer et éteindre) est intégré dans le clip.
